# EUROPEAN PATENT APPLICATION

(11) **EP 3 196 652 A1**
(43) Date of publication of application: **26.07.2017**
(21) Application number: 16152359.2
(22) Date of filing: 22.01.2016
(51) Int. Cl.: G01N 35/02, B65G 17/12, B65G 17/00, B65G 17/46, B65G 47/57, B65G 17/32, G01N 35/04

(54) **LABORATORY DISTRIBUTION SYSTEM**

(71) Applicant: Roche Diagnostics GmbH, 68305 Mannheim (DE); F. Hoffmann-La Roche AG, 4070 Basel (CH)
(72) Inventor: The designation of the inventor has not yet been filed
(74) Representative: Patentanwälte Ruff, Wilhelm, Beier, Dauster & Partner mbB

(57) **Abstract**

The invention relates to a laboratory distribution system for use in a laboratory automation system with a number of diagnostic laboratory container carriers (3) and a conveyor device (2), the conveyor device (2) comprising an endless drive member (20), in particular a belt or a chain, defining a closed-loop conveyor pathway, and a number of supporting elements (24) attached to the endless drive member (20), which supporting elements (24) are adapted for receiving one diagnostic laboratory container carrier (3) and for transporting said diagnostic laboratory container carrier (3) in an upright position along at least a section of the conveyor pathway, wherein the supporting elements (24) are each mounted pivotally about a horizontal pivot axis (26) to the drive member (20) for maintaining the supporting elements (24) in an upright use position while travelling along the conveyor path. The invention further relates to a laboratory automation system comprising a laboratory distribution system.

## Description

### TECHNICAL FIELD AND PRIOR ART

The invention relates to a laboratory distribution system for use in a laboratory automation system. The invention further relates to a laboratory automation system comprising a laboratory distribution system.

A laboratory automation system comprises a number of pre-analytical, analytical and/or post-analytical stations, in which samples, for example blood, saliva, swab, urine and other specimens taken from the human body, are processed. It is generally known to provide sample tubes containing the samples. The sample tubes are also referred to as test tubes. For processing of the sample, the sample tubes are distributed to designated stations or operating positions of the laboratory automation system.

Several sample tubes can be placed in so-called racks for a handling and for a distribution with the laboratory automation system. In an alternative system, sample tubes are placed in an upright or vertical position in so called pucks having a retaining area for retaining one single sample tube. The pucks are also referred to as single sample tube carriers.

Further, carriers for example tubes or vessels can be provided, for transporting auxiliary fluids or substances, such as reagents, quality control liquids and/or calibration liquids. In the context of the application, single sample tube carriers or other carriers are conjointly referred to as diagnostic laboratory container carriers.

In order to transfer single sample tube carriers between stations of a laboratory automation system arranged at different levels or heights, WO 2015/059620 A1 shows an endless motor-driven belt to which shelves are attached at a regular distance over the entire height. The shelves are intended to receive and transport single sample tube carriers. The belt is intermittently driven and pushers are provided for pushing the sample tube carriers onto the shelves or from the shelves to subsequent conveyor devices while the belt is stopped.

### SUMMARY OF THE INVENTION

It is the object of the invention to provide a laboratory distribution system allowing a distribution of sample tubes in a closed or unclosed manner and/or additional containers, such as vessels or tubes. It is a further object to provide a laboratory automation system comprising a laboratory distribution system.

According to a first aspect, a laboratory distribution system for use in a laboratory automation system with a number of diagnostic laboratory container carriers and a conveyor device is provided, wherein the conveyor device comprises an endless drive member, in particular a belt or a chain, defining a closed-loop conveyor pathway, and a number of supporting elements attached to the endless drive member, which supporting elements are adapted for receiving one diagnostic laboratory container carrier and for transporting said diagnostic laboratory container carrier in an upright position along at least a section of the conveyor pathway, and wherein the supporting elements are each mounted pivotally about a horizontal pivot axis to the drive member for maintaining the supporting elements in an upright use position while travelling along the conveyor path.

Diagnostic laboratory container carriers, in particular single sample tube carriers, can be conveyed either empty or while retaining a container, in particular a sample tube. Due to pivotable or rotatable mounting of the supporting elements, an arbitrary conveyor pathway having vertical, horizontal and/or inclined sections can be provided, wherein the supporting elements are passively or actively rotated to maintain the carriers and, if applicable, a container such as a sample tube retained, in an upright position. The pivotally mounted support elements are also referred to as gondolas.

In one embodiment, the supporting elements each are structured such that a center of gravity is arranged below the pivot axis when the supporting element is in an upright use position. In particular, in one embodiment, the supporting elements each are provided with a counterweight arranged below the pivot axis when the supporting element is in an upright use position. The shape and weight of the supporting element, in particular including the counterweight is chosen by the person skilled in the art suitably to ensure that the supporting element remains in an upright use position when changing the inclination of the conveyor path.

In alternative or in addition, in one embodiment the supporting elements have a receiving area for receiving one diagnostic laboratory container carrier, which receiving area is arranged below the pivot axis when the supporting element is in an upright use position. Due to this arrangement, it is possible to ensure that the center of gravity is always kept below the pivot axis and that the supporting element remains in an upright use position when changing the inclination of the conveyor path.

According to one embodiment, the system further comprises at least one transfer device, which transfer device is adapted to cooperate with the supporting elements for transferring one diagnostic laboratory container carrier, in particular one single sample tube carrier, onto one of the supporting elements and/or for taking-over one diagnostic laboratory container carrier, in particular one single sample tube carrier, from one of the supporting elements.

Such a transfer device is also advantageous for use in laboratory distribution system with a conveyor device comprising an endless drive member, in particular a belt or a chain, defining a closed-loop conveyor pathway, and a number of supporting elements attached to the endless drive member, wherein the supporting elements are not necessarily mounted pivotally to the drive member.

In one embodiment, the endless drive member is stopped and the diagnostic laboratory container carrier is moved onto the supporting element, for example pushed onto the supporting element. In another embodiment, the diagnostic laboratory container carrier is held by means of magnetic forces in the movement path of the supporting elements for a transfer to or from the supporting elements, wherein holding elements protruding into the movement path of the supporting elements are avoided.

In other embodiments, the transfer device comprises a holding element arranged in a transfer position in the movement path of the supporting elements, wherein the holding element and the supporting elements have complementary shapes to avoid an interference of the holding element arranged in the transfer position with the movement path of the supporting elements.

Due to the non-overlapping design of the supporting elements and the holding element arranged in the transfer position, a take-over of the diagnostic laboratory container carriers is possible without stopping the endless drive member. This is advantageous as sample tubes conveyed by the conveyor device are transported in a continuous flow ensuring a considerate or gentle handling of the samples. Further, the transfer device could be arranged anywhere along the conveyor path without the necessity to effect the transfer at an exact position and with small tolerances. In one embodiment, the endless drive member is driven to move at a constant speed. In other embodiments, the speed is altered to allow a smooth transfer of the diagnostic laboratory container carriers.

The shape of the supporting elements and the holding elements can be chosen by the person skilled in the art in order to allow for a reliable support of the diagnostic laboratory container carriers on the supporting elements as well as on the holding elements.

In one embodiment, the shape of one of the holding element and the supporting elements is in the form of a fork having at least two fingers and the shape of the other one of the holding element and the supporting elements is in the form of a jaw passing through the at least two fingers. For example, the holding element is in the form of a fork having two fingers between which the jaw of the supporting elements passes upon moving the supporting element past the holding element. In case a diagnostic laboratory container carrier is placed on the fork, the jaw will take-over this diagnostic laboratory container carrier.

It will be understood that the shape of the holding element avoiding an interference with the supporting elements allows maintaining the holding element fixed in position in the transfer position, wherein empty supporting elements can pass by the holding element without any interference. In this embodiment, the transfer device comprises elements for transferring one diagnostic laboratory container carrier onto and/or off the stationary arranged holding element. In an alternative embodiment, the holding element is arranged moveably into and out of the transfer position for allowing supporting elements carrying one of the number of diagnostic laboratory container carriers to pass pay. For example, the holding element is mounted slidingly and moved laterally into and out of the transfer position.

In one embodiment, the transfer device comprises a carousel conveyor with a rotatable or swivelable disc having at least one recess for receiving one diagnostic laboratory container carrier, wherein the disc functions as the holding element. In particular said diagnostic laboratory container carrier is provided with a rim placed on a top surface of the disc in the periphery of the recess for holding the diagnostic laboratory container carriers. In this embodiment, the rim functions as a fork for holding the diagnostic laboratory container carrier allowing supporting elements to pass through the recess for taking-over a diagnostic laboratory container carrier presented. A movement of the disc is synchronized with the conveyor device in order to avoid any interference. In particular, a timing control in one embodiment comprises optical barriers and/or presence detectors arranged at the transfer device, in particular at the disc, and the drive member.

In alternative or in addition, in another embodiment, the transfer device comprises at least one active transfer element for moving one of the number of diagnostic laboratory container carriers onto the holding element arranged in the transfer position or for moving one of the number of diagnostic laboratory container carriers of the holding element arranged in the transfer position. In other words, the holding element remains arranged fixed in position in the transfer position. In order to move a diagnostic laboratory container carrier onto or off the holding element, in one embodiment an active transfer element selected from a group comprising a carousel conveyor, a transport belt, a pusher, and a screw conveyor is provided.

In one embodiment, the transfer device is further adapted for singling diagnostic laboratory container carriers. In other words, by means of the transfer device it is ensured that at one pickup position only one diagnostic laboratory container carrier is arranged at the time.

In addition or in alternative to a pivotal mounting, the support elements or gondolas in one embodiment are gimbal-mounted, resiliently mounted and/or mounted with play in order to compensate smaller inaccuracies of the drive member and/or the mount in the horizontal direction when transferring a diagnostic laboratory container carrier onto the support elements or off the support elements. In particular in one embodiment, the resilient mount is adapted to allow a stopping of a support element when transferring a diagnostic laboratory container carrier onto the support elements or off the support elements, while continuing a movement of the drive belt. After completing the transfer, the support element is released and moved into a neutral mounting position at the drive belt. The laboratory distribution system can be combined with various other transport systems adapted to transport diagnostic laboratory container carriers individually or in bundles. The laboratory distribution system in one embodiment further comprises a transport system with a number of electro-magnetic actuators, wherein the diagnostic laboratory container carriers each comprise at least one magnetically active device, in particular at least one permanent magnet, and wherein the number of electro-magnetic actuators are adapted to move the diagnostic laboratory container carriers along the transport system by applying a magnetic force to the diagnostic laboratory container carriers. In particular, in one embodiment the system comprises a transport plane adapted to carry said diagnostic laboratory container carriers, wherein the number of electro-magnetic actuators are stationary arranged below the transport plane, and wherein the electro-magnetic actuators are adapted to move a diagnostic laboratory container carrier along the top of the transport plane by applying a magnetic force to said diagnostic laboratory container carrier. The diagnostic laboratory container carriers can be distributed individually along the transport system, in particular over the transport plane to an appropriate station and/or to the conveyor device comprising the endless drive member.

In one embodiment, the supporting elements are adapted to apply a magnetic force to a diagnostic laboratory container carrier comprising at least one magnetically active device, in particular at least one permanent magnet. The magnetic force allows for a reliable retaining of the diagnostic laboratory container carriers. In alternative or in addition, the diagnostic laboratory container carrier in one embodiment each comprise an electroactive element and are adapted to apply an electric field to the at least one an electroactive element for gripping a diagnostic laboratory container carrier. The electroactive element is made for example at least partly from an electroactive polymer, wherein by applying the electric field the electroactive element is deformed or moved for gripping the diagnostic laboratory container carrier. Such a magnetic or electroactive retention system is also advantageous in conveyor systems having an endless drive member and supporting elements, which are not pivotally mounted and suitable for example to convey diagnostic laboratory container carriers along conveyor paths or conveyor path sections without any change in the direction.

In other embodiments, in alternative or in addition the supporting element are provided with a boundary wall extending at least partly about the periphery of a retaining area for centering and retaining a diagnostic laboratory container carrier having a circular cylindrical base. The circumferential extent and/or the height of the boundary wall can be suitably chosen by the person skilled in the art in dependence of the speed of the system and the size of the diagnostic laboratory container carriers in order to ensure that the diagnostic laboratory container carriers remain on the supporting elements.

According to a second aspect, a laboratory automation system with a number of pre-analytical, analytical and/or post-analytical stations, and with a laboratory distribution system as described above is provided.

### BRIEF DESCRIPTION OF THE DRAWINGS

In the following, an embodiment of the invention will be described in detail with reference to the drawings. Throughout the drawings, the same elements will be denoted by the same reference numerals. Features of different embodiments could be combined to obtain further embodiments.
- Fig 1:: A first embodiment of a layout of a laboratory distribution system for lifting or lowering diagnostic laboratory container carriers.
- Fig. 2:: A second embodiment of a layout of a laboratory distribution system for providing a passageway.
- Fig. 3:: A third embodiment of layout of a laboratory distribution system for distributing diagnostic laboratory container carriers.
- Fig 4:: A first embodiment of laboratory distribution system according to the layout of Fig. 2.
- Fig 5:: A detail V of Fig. 4.
- Fig 6:: A detail VI of Fig. 4.
- Fig 7:: A detail VII of Fig. 4.
- Fig 8:: A supporting element of the laboratory distribution system of Fig. 4.
- Fig 9:: The supporting element of Fig. 8 retaining a diagnostic laboratory container carrier.
- Fig. 10:: A transfer device for transferring a diagnostic laboratory container carrier to the supporting element.
- Fig. 11:: Another embodiment of transfer device for transferring a diagnostic laboratory container carrier to the supporting element.
- Fig. 12:: A rotatable disc of the transfer device of Fig. 11 during take-over of a diagnostic laboratory container carrier.
- Fig. 13:: The rotatable disc of the transfer device of Fig. 11 at idle times.
- Fig. 14:: A side view of the transfer device similar to Fig. 11 during take-over of a diagnostic laboratory container carrier.
- Fig 15:: A first alternative embodiment of a supporting element of the laboratory distribution system of Fig. 4.
- Fig 16:: A second alternative embodiment of a supporting element of the laboratory distribution system of Fig. 4.
- Fig 17:: Another embodiment of a transfer device comprising a pusher.
- Fig 18:: Another embodiment of a transfer device comprising a screw conveyer.

### DETAILED DESCRIPTION OF EMBODIMENTS OF THE INVENTION

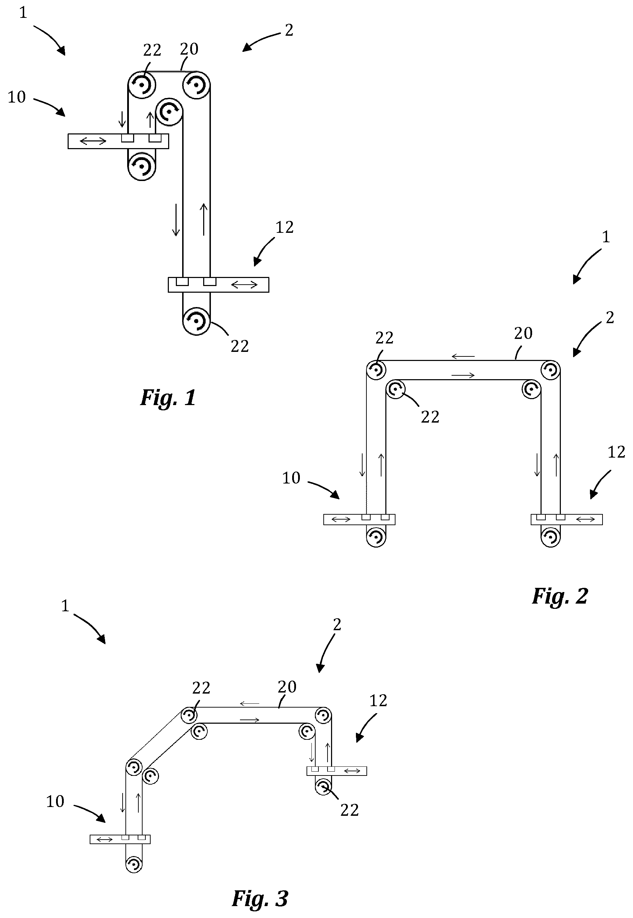

Figs. 1 to 3 show three embodiments of a layout of a sample distribution system, in particular a sample distribution system 1 for conveying diagnostic laboratory container carriers (not shown in Figs. 1 to 3) between a first station 10 and a second station 12 of a laboratory automation system.

Each laboratory distribution system 1 comprises a conveyor device 2 with an endless drive member 20 and a number of pulleys 22 defining a closed-loop conveyor pathway. At least one of the pulleys 22 is driven for moving the endless drive member 20 along the conveyor pathway. Preferably, the remaining pulleys are idler pulleys.

As shown in Figs. 1 to 3, arbitrary conveyor pathways may be provided, wherein for example Fig 1 shows a layout arranged for lifting or lowering diagnostic laboratory container carriers between the first station 10 and the second station 12, Fig. 2 shows a layout for providing a passageway between two stations 10, 12, and Fig. 3 shows a layout of for distributing diagnostic laboratory container carriers between two stations 10, 12, which are vertically and horizontally distanced from one another. It will be apparent to the person skilled in the art that the layouts shown are only by way of example and unlimited variations are possible.

In accordance with the invention, the endless drive member 20 is for example a chain or a belt to which a number of supporting elements (not shown in Figs 1 to 3) are mounted pivotally about a horizontal pivot axis.

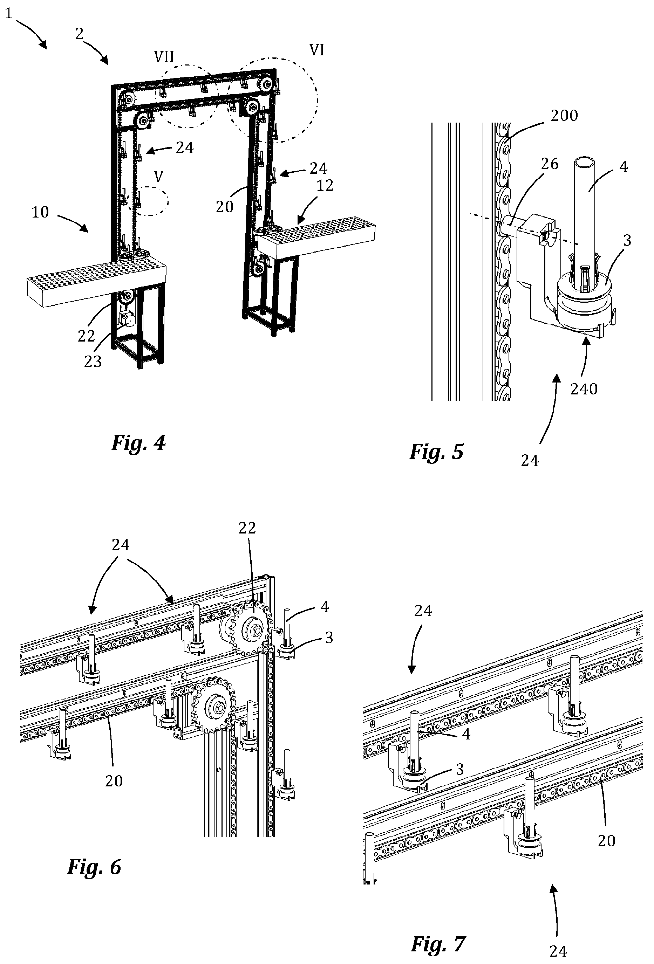

Fig. 4 shows an embodiment of a laboratory distribution system 1 with a layout similar to Fig. 2, wherein the endless drive member 20 is a chain. Figs. 5 to 7 show details of Fig. 4.

As shown in Fig. 4, the endless drive member 20 is driven by means of a motor 23 driving one of the pulleys 22 arranged underneath one station 10. The chain can be driven by the motor 23 to move in either direction.

As can be best seen in Fig. 5, the supporting elements 24 are mounted pivotally about a horizontal pivot axis 26 to the chain, wherein in the embodiment shown for sake of simplicity the horizontal pivot axis 26 coincides with one of the axes of the chain links 200. In any position of the conveyor path, the horizontal pivot axis 26 is always perpendicular to the movement direction of the endless drive member 20. The supporting elements 24 are adapted for receiving diagnostic laboratory container carriers 3. The pivotal mounting of the supporting elements 24 to the drive member 20 allows maintaining the supporting elements 24 in an upright use position as shown in the Figures 4 to 7, while travelling along the conveyor path. This allows conveying capped or otherwise closed sample tubes 4 as well as uncapped or open sample tubes 4 in an upright state along the entire conveyor path or along an arbitrary section of the conveyor path. In the embodiment shown, one sample tube 4 is retained in each diagnostic laboratory container carrier 3. Of course, it is also possible to convey empty diagnostic laboratory container carriers 3.

In the embodiment shown, the supporting elements 24 each have a receiving area 240 for receiving one diagnostic laboratory container carrier 3, which receiving area 240 is arranged below the pivot axis 26 when the supporting element 24 is in an upright use position as shown in Figs. 4 to 7. The arrangement ensures that the center of gravity of the assembly comprising the supporting element 24, the diagnostic laboratory container carrier 3 and the sample tube 4 as well as of subgroups thereof is always underneath the pivot axis 26 and gravitational forces can be used for maintaining the supporting elements 24 with or without diagnostic laboratory container carriers 3 in the upright position.

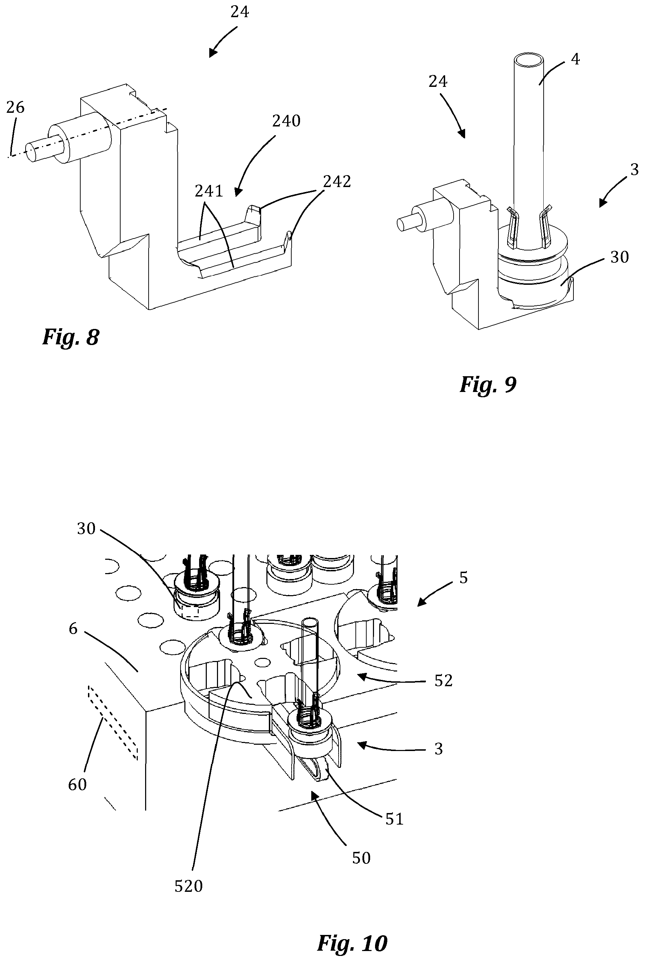

Fig 8 and 9 show the supporting element 24 of the laboratory distribution system of Fig. 4 in isolation and retaining a diagnostic laboratory container carrier 3, respectively. The supporting element 24 is in the form of a fork having two fingers 241 together forming the retaining area 240. The fingers 241 of the supporting element 24 shown in Figs. 8 and 9 are provided with a boundary wall 242 adapted to the circumferential shape of the base 30 of the diagnostic laboratory container carrier 3 for centering and retaining the diagnostic laboratory container carrier 3 as shown in Fig. 9 having a circular cylindrical base 30. The support element 24 approaches a diagnostic laboratory container carrier 3 from below for taking-over the diagnostic laboratory container carrier 3 as will be described below. Hence, the boundary wall 242 does not hinder a movement of the diagnostic laboratory container carrier 3 onto the retaining area 240 of the supporting element 24.

In alternative or in addition to the boundary wall, in one embodiment the supporting elements are adapted to apply a magnetic force and/or an electric field to the diagnostic laboratory container carrier 3 comprising at least one magnetically active device, in particular at least one permanent magnet, and/or an electroactive element. The magnetic force allows for a reliable retaining of the diagnostic laboratory container carriers. In alternative or in addition, the diagnostic laboratory container carrier may comprise an electroactive element, made for example at least partly from an electroactive polymer, wherein by applying the electric field the electroactive element is deformed or moved for gripping the diagnostic laboratory container carrier. Such a magnetic or electroactive retention system is also advantageous in conveyor systems having an endless drive member and supporting elements, which are not pivotally mounted and suitable for example to convey diagnostic laboratory container carriers along conveyor paths or conveyor path sections without any change in the direction.

Fig. 10 shows an embodiment of a transfer device 5 which transfer device is adapted to cooperate with the supporting elements 24 for transferring one diagnostic laboratory container carrier 3 onto one of the supporting elements 24 and/or for taking-over one diagnostic laboratory container carrier 3 from one of the supporting elements 24.

The transfer device 5 comprises a holding element 50 in the form of a jaw which is arranged in a transfer position in the movement path of the supporting elements (not shown in Fig. 10). The jaw-shape of the holding element 50 is complementary to the fork-shape of the supporting elements 24 shown in Figs. 4 to 9 allowing the supporting elements 24 to move past the holding element 50 arranged in the transfer position. More in particular, when approaching the holding element 50 with the supporting element 24 shown in Fig. 8 from below, the fingers 241 passes by opposite sides of the holding element 50 and contact diagnostic laboratory container carrier 3 for taking over the diagnostic laboratory container carrier 3 from the holding element 50. As will be understood by the person skilled in the art, the transfer can be carried out without stopping the endless drive member and at any position along the vertical section of the conveyor path.

Similar, for transferring the diagnostic laboratory container carrier 3 to the holding element 50, the supporting element 24 approaches the holding element 50 from above and the fingers 241 pass by the holding element 50, thereby positioning the diagnostic laboratory container carrier 3 on the holding element 50.

In the embodiment shown in Fig. 10, the transfer device 5 comprises a transfer belt 51 for moving the diagnostic laboratory container carrier 3 onto the holding element 50 and into a position adapted for presenting the diagnostic laboratory container carrier 3 to the supporting element 24.

The laboratory distribution system of Fig. 4 can be combined with other distribution systems, for example comprising conveyor belts, screw conveyors, rails. In the embodiment shown in Fig. 10, the transfer device 5 is provided at a periphery of a transport plane 6, which transport plane 6 is adapted to carry a plurality of diagnostic laboratory container carriers 3. In one embodiment, the diagnostic laboratory container carriers 3 each comprise at least one magnetically active device, in particular at least one permanent magnet as schematically indicated by a dashed line 30 in Fig. 10. Further, a number of electro-magnetic actuators schematically indicated by a dashed line 60 in Fig. 10 are stationary arranged below the transport plane 6, wherein the electro-magnetic actuators 60 are adapted to move the diagnostic laboratory container carriers 3 along the top of the transport plane 6 by applying a magnetic force to the diagnostic laboratory container carriers.

The transfer device 5 shown in Fig. 10 is adapted for singling diagnostic laboratory container carriers 3 conveyed along the top of the transport plane 6 prior to presenting one diagnostic laboratory container carrier 3 to the conveyor device 2. For this purpose, a carousel 52 is provided, having a disc 520 which is rotated to move singular diagnostic laboratory container carriers 3 onto the transfer belt 51. Next, by means of the transport belt 51, the diagnostic laboratory container carrier 3 is moved into the conveyor path for presenting the diagnostic laboratory container carrier 3 to the supporting elements 24 (see Figs. 4 to 9).

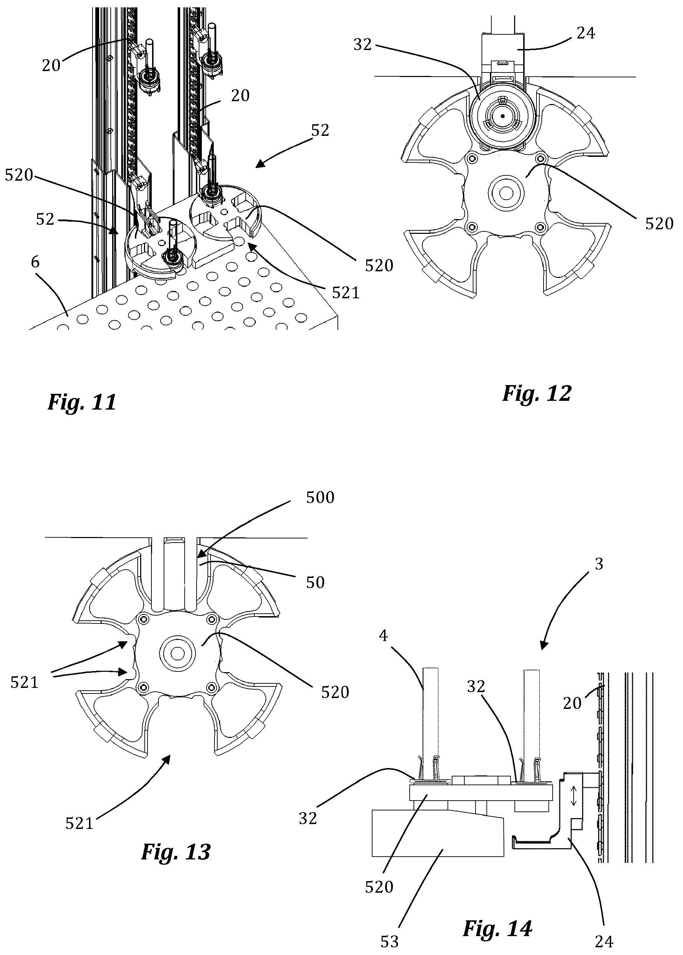

Fig. 11 shows an embodiment of laboratory distribution system 1 having an alternative transfer device 5. Figs. 12 and 13 schematically show a top view of the transfer device 5 of Fig. 11 during take-over and at idle times, respectively. The transfer device 5 shown in Fig. 11 comprises two carousels 52, each carousel 52 having a disc 520, which is rotated to move a singular diagnostic laboratory container carrier 3 into a presenting position in the movement path of the supporting elements 24 or out of the movement path of the supporting elements 24. The discs 520 shown each have four recesses 521 for receiving the diagnostic laboratory container carriers 3. The transfer device 5 comprises stationary arranged holding elements 50 supporting the base surface of the diagnostic laboratory container carrier 3 when arranged in the presenting position in the movement path of the supporting elements 24. The discs 520 are rotated to move the diagnostic laboratory container carrier 3 onto or off the holding elements 50. The shape of the holding elements 50 is chosen so that an interference with the supporting elements 24 is avoided allowing empty supporting elements 24 to pass by the holding element 50 without any interference. For this purpose, as best seen in Fig. 13, the holding elements 50 and the disc 520 are provided with cutouts 500, 521 allowing the supporting element 24 shown in Figs. 8 to 9 to pass.

Fig. 14 is a schematic side view of a system 1 similar to Figs. 11 to 13. In contrast to Figs. 11 to 13, the diagnostic laboratory container carriers 3 are not placed on a holding element supporting the base surface of the diagnostic laboratory container carrier 3 when arranged in the presenting position in the movement path of the supporting elements 24. Rather, the discs 520 of the carousels 520 function as holding elements. For this purpose, a rim 32 of the diagnostic laboratory container carrier 3 is placed on a top surface of the discs 520 in the periphery of the recess 521 when rotating the discs 520 to move the diagnostic laboratory container carriers 3 into the movement path of the supporting elements 24. The height of the discs 520 is chosen so that when moving the diagnostic laboratory container carrier 3 on tip of the transfer plane 6 and/or the housing 53 into a recess 521, the rim 32 is arranged with a small distance to the upper surface of the discs 520.

When rotating the disc 520 by for example 180° the diagnostic laboratory container carrier 3 is moved into the movement path of the supporting elements 24, wherein upon the rotation the diagnostic laboratory container carrier 3 is removed from an inclined upper surface of a housing 53 while being held at the rim 32 by means of the disc 520. After the rotation, the supporting element 24 can be approached from below for taking-over the diagnostic laboratory container carrier 3. Similar, a diagnostic laboratory container carrier 3 supported by a supporting element 24 approached from above can be transferred to the disc 520. The disc 520 can then be rotated placing the diagnostic laboratory container carrier 3 back on the upper surface of the housing 53, wherein the inclined surface allows for a smooth transition.

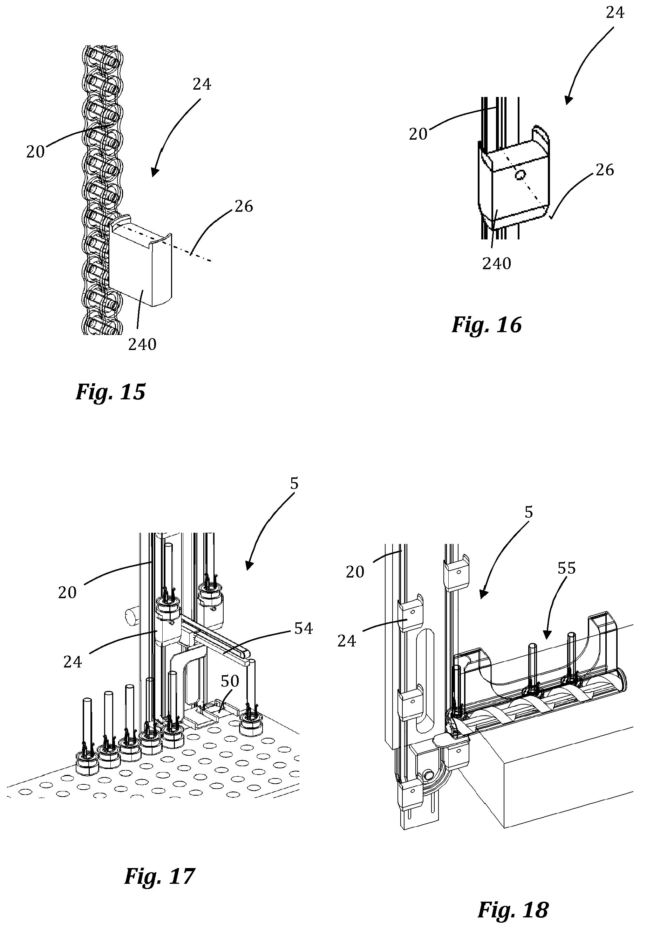

Fig. 15 shows an alternative embodiment of a supporting element 24 mounted pivotally about a horizontal pivot axis 26 to an endless drive member 20 in the form of a chain. The supporting element 24 is in the form of a rectangular solid and arranged with a short side facing the chain so that the supporting element 24 protrudes like a jaw form the chain. A holding element (not shown in Fig. 15) for presenting a diagnostic laboratory container carrier 3 to the supporting element 24 has for example the shape of a fork having two fingers, wherein the supporting element 24 passes between the fingers for transferring a diagnostic laboratory container carrier 3 to or from the holding element. The supporting element 24 is provided with a counterweight 240 arranged below the pivot axis 26 when the supporting element 24 is in the upright use position shown in Fig. 15 for maintaining the supporting element 24 in the upright use position while travelling along the conveyor path.

Fig. 16 shows another alternative embodiment of a supporting element 24 mounted pivotally about a horizontal pivot axis 26 to an endless drive member 20 in the form of a belt. The supporting element 24 is similar to the supporting element 24 shown in Fig. 15 and is also provided with a counterweight 240 arranged below the pivot axis 26 when the supporting element 24 is in the upright use position shown in Fig. 16. In contrast to Fig. 15, the supporting element 24 shown in Fig. 16 is arranged with a long side facing the belt.

Fig. 17 and 18 show two embodiments of transfer devices 5 for transferring diagnostic laboratory container carriers 3 onto supporting elements 24 of Fig. 16 and/or for taking-over diagnostic laboratory container carriers 3 from the supporting elements 24.

The transfer device 5 shown in Fig. 17 comprises a stationary arranged holding element 50 and a pusher 54 for pushing a diagnostic laboratory container carrier 3 off the holding element 50. Likewise a pusher could be provided for pushing diagnostic laboratory container carrier 3 onto a holding element 50.

The transfer device 5 shown in Fig. 18 comprises a stationary arranged holding element (not visible in Fig. 18) and a screw conveyor 55 for conveying diagnostic laboratory container carriers 3 to the holding element or off the holding element.

It is to be understood that the embodiments shown are only exemplary, and that various modifications can be made in construction and arrangement within the scope of the invention as defined in the appended claims.

## Claims

1. Laboratory distribution system (1) for use in a laboratory automation system with a number of diagnostic laboratory container carriers (3) and a conveyor device (2), the conveyor device (2) comprising
- an endless drive member (20), in particular a belt or a chain, defining a closed-loop conveyor pathway, and
- a number of supporting elements (24) attached to the endless drive member (20), which supporting elements (24) are adapted for receiving one diagnostic laboratory container carrier (3) and for transporting said diagnostic laboratory container carrier (3) in an upright position along at least a section of the conveyor pathway,
**characterized in that**
the supporting elements (24) are each mounted pivotally about a horizontal pivot axis (26) to the drive member (20) for maintaining the supporting elements (24) in an upright use position while travelling along the conveyor path.

2. Laboratory distribution system according to claim 1, **characterized in that** the supporting elements (24) each are structured such that a center of gravity is arranged below the pivot axis (26) when the supporting element (24) is in an upright use position, wherein in particular the supporting elements (24) each are provided with a counterweight (240) arranged below the pivot axis (26) when the supporting element (24) is in an upright use position.

3. Laboratory distribution system according to claim 1 or 2, **characterized in that** the supporting elements (24) have a receiving area (240) for receiving one diagnostic laboratory container carrier (3), which receiving area (240) is arranged below the pivot axis (26) when the supporting element is in an upright use position.

4. Laboratory distribution system according to any one of claims 1 to 3, **characterized in that** the system further comprises at least one transfer device (5), which transfer device (5) is adapted to cooperate with the supporting elements (24) for transferring one diagnostic laboratory container carrier (3) onto one of the supporting elements (24) and/or for taking-over one diagnostic laboratory container carrier (3) from one of the supporting elements (24).

5. Laboratory distribution system according to claim 4, **characterized in that** the transfer device (5) comprises a holding element (50, 520) arranged in a transfer position in the movement path of the supporting elements (24), wherein the holding element (50, 520) and the supporting elements (24) have complementary shapes to avoid an interference of the holding element (50, 520) arranged in the transfer position with the movement path of the supporting elements (24).

6. Laboratory distribution system according to claim 5, **characterized in that** the shape of one of the holding element (50) and the supporting elements (24) is in the form of a fork having at least two fingers (241) and the shape of the other one of the holding element (50) and the supporting elements (241) is in the form of a jaw passing through the at least two fingers (241).

7. Laboratory distribution system according to any one of claims 5 or 6, **characterized in that** the transfer device comprises a carousel conveyor (52) with a rotatable or swivelable disc (520) having at least one recess (521) for receiving one diagnostic laboratory container carrier (3), wherein the disc (520) functions as the holding element.

8. Laboratory distribution system according to claim 7, **characterized in that** the said diagnostic laboratory container carrier (3) is provided with a rim (32) placed on a top surface of the disc (520) in the periphery of the recess (521) for holding the diagnostic laboratory container carrier (3) in the movement path of the supporting elements.

9. Laboratory distribution system according to any one of claims 5 to 8, **characterized in that** the transfer device (5) comprises at least one active transfer element (51) for moving one of the number of diagnostic laboratory container carriers (3) onto the holding element (50) or for moving one of the number of diagnostic laboratory container carriers (3) of the holding element (50).

10. Laboratory distribution system according to claim 9, **characterized in that** the active transfer element is selected from a group comprising a carousel conveyor (52), a transport belt (51), a pusher (54), and a screw conveyor (55).

11. Laboratory distribution system according to any one of claims 4 to 10, **characterized in that** the transfer device (5) is adapted for singling diagnostic laboratory container carriers.

12. Laboratory distribution system according to any one of claims 1 to 11, **characterized in that** the support elements (24) are gimbal-mounted, resiliently mounted and/or mounted with play in order to compensate smaller inaccuracies of the drive member and/or the mount when transferring a diagnostic laboratory container carrier (3) onto the support elements (24) or off the support elements (24).

13. Laboratory distribution system according to any one of claims 1 to 12, **characterized in that** the laboratory distribution system (1) further comprises a transport system with a number of electro-magnetic actuators, wherein the diagnostic laboratory container carriers (3) each comprise at least one magnetically active device, in particular at least one permanent magnet (30), and wherein the number of electro-magnetic actuators are adapted to move the diagnostic laboratory container carriers (3) along the transport system by applying a magnetic force to the diagnostic laboratory container carriers (3), in particular wherein the laboratory distribution system (1) comprises a transport plane (6) adapted to carry said diagnostic laboratory container carriers (3), wherein the number of electro-magnetic actuators (60) are stationary arranged below the transport plane (6), and wherein the electro-magnetic actuators (60) are adapted to move the diagnostic laboratory container carriers (3) along the top of the transport plane (6) by applying a magnetic force to the diagnostic laboratory container carriers (3).

14. Laboratory distribution system according to any one of claims 1 to 13, **characterized in that** the supporting elements are adapted to apply a magnetic force to a diagnostic laboratory container carrier (3) comprising at least one magnetically active device, in particular at least one permanent magnet, and/or comprise at least one an electroactive element and are adapted to apply an electric field to the at least one an electroactive element for gripping a diagnostic laboratory container carrier (3).

15. Laboratory distribution system according to any one of claims 1 to 14, **characterized in that** the supporting element (24) are provided with a boundary wall (242) extending at least partly about the periphery of a retaining area (241) for centering and retaining a diagnostic laboratory container carrier (3) having a circular cylindrical base (30).

16. Laboratory automation system with a number of pre-analytical, analytical and/or post-analytical stations, and with a laboratory distribution system (1) according to any one of claims 1 to 15.
